# FASCICULE DE BREVET EUROPEEN

(11) **EP 3 022 003 B1**
(45) Date de publication et mention de la délivrance du brevet: **17.03.2021**
(21) Numéro de dépôt: 14737270.0
(22) Date de dépôt: 10.07.2014
(51) Int. Cl.: B23K 9/02, B23K 9/28, B23K 9/29, B23K 26/14

(54) **DISPOSITIF DE SOUDAGE EN CHANFREIN ÉTROIT**
VORRICHTUNG ZUM ENGSPALTSCHWEISSEN
DEVICE FOR PRODUCING A WELD JOINT IN A NARROW CHAMFER

(30) Priorité: 16.07.2013 FR 1356983
(43) Date de publication de la demande: 25.05.2016
(73) Titulaire: FRAMATOME, 92400 Courbevoie (FR)
(72) Inventeur: FAUTRAT, Sylvain, F-71100 Chalon sur Saone (FR); PETIT, Alain, Jean, F-71240 Varennes le Grand (FR); CARREZ, Nicolas, F-71100 Lux (FR); LECONTE, François, F-71620 St Martin en Bresse (FR)
(74) Mandataire: Lavoix
(86) Numéro de dépôt international: PCT/EP2014/064864
(87) Numéro de publication internationale: WO 2015/007618

(56) Documents cités:
- DD-A1- 113 467
- JP-A- H0 839 247
- JP-A- 2013 071 174
- JP-B2- 3 427 115
- US-A- 4 467 173
- US-A1- 2010 193 571
- US-A1- 2012 273 466
- US-A1- 2013 153 557

## Description

La présente invention concerne en général les dispositifs de soudage en chanfrein étroit.

Plus précisément, l'invention concerne un dispositif de soudage du type comprenant :
- un porte torche ;
- un corps de torche lié au porte torche ;
- une électrode liée au corps de torche ;
- une alimentation électrique de l'électrode.

Un tel dispositif de soudage est connu de EP 1 287 937. Le corps de torche et l'électrode décrits dans ce document sont adaptés pour le procédé de soudage connu sous le nom de GMAW (Gas Metal Arc Welding). Plus particulièrement ils sont adaptés pour un soudage de type MIG (Metal Inert Gas) ou MAG (Metal Active Gas). Le dispositif de EP 1 287 937 peut difficilement être utilisé pour souder dans un chanfrein étroit d'une largeur supérieure à 10 mm, d'une épaisseur supérieure à 140 mm, en deux passes par couche, avec une productivité très élevée. En effet, la section du corps de torche est trop grande pour permettre de déplacer l'électrode d'un bord à l'autre du chanfrein.

Par ailleurs, US 4 467 173 A divulgue un dispositif de soudage selon le préambule de la revendication 1.

Dans ce contexte, l'invention vise à proposer un dispositif de soudage qui ne présente pas le défaut ci-dessus.

A cette fin, l'invention porte sur un dispositif de soudage selon la revendication 1.

Ainsi, il est possible de déplacer la partie inférieure du corps de torche par rapport à la partie supérieure, ce qui permet un changement d'orientation de l'électrode. Il est ainsi possible de réaliser un soudage en deux passes par couche. L'électrode est orientée vers un premier côté du chanfrein lors de la première passe, et d'un second côté du chanfrein opposé au premier lors de la seconde passe. L'utilisation d'une plaque flexible pour transmettre le courant de la partie supérieure à la partie inférieure du corps de torche permet de transférer le courant de soudage jusqu'à l'électrode, quelque soit la position de la partie inférieure du corps de torche, sans gêner le mouvement de celle-ci. Les plaques se plient légèrement quand les parties inférieure et supérieure du corps de torche ne sont pas alignées l'une avec l'autre.

Le même conduit de passage permet de faire passer à la fois l'électrode et le gaz de protection. Ceci simplifie la conception du corps de torche.

Les plaques flexibles limitent les déperditions de gaz au niveau de l'interstice, notamment quand la partie inférieure du corps de torche forme un angle significatif par rapport à la partie supérieure.

L'interstice entre les parties supérieure et inférieure du corps de torche est nécessaire pour permettre le débattement des deux parties l'une par rapport à l'autre. Les deux plaques flexibles font qu'il n'est pas nécessaire de prévoir un raccord souple entre les tronçons supérieur et inférieur du conduit de passage. Un tel raccord souple serait en effet exposé à une température importante et aurait une durée de vie courte.

Quand les parties inférieure et supérieure du corps de torche sont dans le prolongement l'une de l'autre, les tronçons supérieur et inférieur du conduit de passage sont sensiblement dans le prolongement l'un de l'autre. Au contraire, quand les parties inférieure et supérieure forment un angle l'un par rapport à l'autre, les tronçons inférieur et supérieur forment également un angle.

Le débattement angulaire de la partie inférieure par rapport à la partie supérieure du corps de torche est typiquement inférieur à 45°, de préférence inférieur à 35° et est encore de préférence inférieur à 15°.

L'alimentation électrique comporte deux plaques flexibles, disposées de part et d'autre du corps de torche. Selon une variante non couverte par la revendication 1, elle ne comporte qu'une seule plaque flexible, ou plus de deux plaques flexibles. Les plaques flexibles sont par exemple en cuivre ou des alliages de cuivre, cuivre-chrome, cuivre-tungstène, cuivre-béryllium. Chaque plaque présente par exemple une épaisseur comprise entre 0,1 et 0,3 mm.

L'amenée de courant est de préférence raccordée électriquement au passage de courant seulement par la ou les plaques flexibles.

La liaison pivot de la partie inférieure à la partie supérieure est de tous types adaptés. Par exemple, la partie inférieure porte des tourillons engagés dans des paliers ménagés dans la partie supérieure.

Selon un aspect avantageux de l'invention, le dispositif comprend un mécanisme à came prévu pour entraîner sélectivement la partie inférieure du corps de torche par rapport à la partie supérieure autour de la liaison pivot.

Il est ainsi possible de commander commodément la position de la partie inférieure du corps de torche par rapport à la partie supérieure. Ce mécanisme à came est de tous types adaptés. Par exemple, il comporte un axe rotatif portant une came. La partie inférieure du corps de torche porte un suiveur de came, coopérant avec la came. Quand l'axe rotatif est entraîné en rotation, la came se déplace autour de l'axe, en entraînant le suiveur de came. Celui-ci entraîne à son tour la partie inférieure du corps de torche en rotation autour de l'axe de la liaison pivot.

L'axe rotatif est commandé manuellement, ou par le biais d'un actionneur. D'autres mécanismes à came sont envisageables.

En variante, la partie inférieure est entraînée par rapport à la partie supérieure avec un mécanisme ne comportant pas de came, par exemple par le biais d'un ensemble de roues dentées.

Selon un aspect avantageux de l'invention, l'électrode est une électrode consommable. Ceci permet de remplir facilement le chanfrein avec un métal d'apport. L'électrode est par exemple en C/Mn (CARBOFIL 1), acier inoxydable (INTERFIL 410), inconel (NIFIL 600) 690 ou 600.

En variante, l'électrode n'est pas consommable, par exemple pour des applications ne nécessitant pas de métal d'apport.

Selon un autre aspect avantageux de l'invention, l'alimentation électrique comporte deux patins conducteurs pinçant l'électrode entre eux et liant l'électrode à la partie inférieure du corps de torche.

On réalise ainsi commodément un passage de courant jusqu'à l'électrode, présentant une forte section de passage pour le courant, sans augmenter excessivement l'épaisseur du corps de torche. Chaque patin présente pour le courant électrique une section de passage comprise entre 16,5 et 35 mm², de préférence entre 30 et 35 mm^{2.} Chaque patin présente un volume entre 500 et 1000 mm³, de préférence compris entre 700 mm³ et 800 mm^{3.}

Ces patins sont typiquement en cuivre ou en alliage cuivre-chrome, cuivre-tungstène.

Les patins sont en contact avec l'électrode par l'intermédiaire de deux surfaces diamétralement opposées autour de l'électrode. Ces surfaces présentent typiquement une superficie adaptée pour passer un courant électrique de l'intensité requise, sans provoquer d'échauffement excessif.

Selon un autre aspect avantageux de l'invention, le conduit de passage présente au moins un orifice de sortie du gaz de protection ménagé sur la partie inférieure du corps de torche et tourné vers une extrémité libre de l'électrode.

Ainsi, le jet de gaz sortant de l'orifice est orienté vers l'extrémité libre de l'électrode, et protège de manière très efficace le bain de soudure.

Typiquement, les deux patins conducteurs délimitent entre eux au moins une rainure, l'orifice de sortie débouchant à une extrémité de la rainure. Ainsi, les deux patins n'empêchent pas la circulation du gaz et au contraire facilitent l'écoulement de celui-ci jusqu'à l'extrémité de l'électrode.

Typiquement, les plaques flexibles s'étendent sur toute la largeur de l'interstice, de manière à limiter les pertes de gaz de protection.

De préférence, chacune des deux plaques flexibles raccorde électriquement l'amenée de courant au passage de courant.

Selon un autre aspect avantageux de l'invention, le dispositif de soudage comporte un circuit de refroidissement du corps de torche. Ceci permet de conserver pour le corps de torche une température de fonctionnement inférieure à 25°C, avec un facteur de marche de 100%.

Un fluide de refroidissement circule dans le circuit de refroidissement, typiquement de l'eau.

Selon un autre aspect avantageux de l'invention, la partie inférieure du corps de torche, et au moins un tronçon de la partie supérieure, présentent une épaisseur inférieure à 2 cm.

Ainsi, le corps de torche peut être introduit facilement dans un chanfrein étroit.

Typiquement, ledit tronçon de la partie supérieure présente une section sensiblement rectangulaire, l'épaisseur de 2 cm étant prise entre les deux grands côtés de ladite section. L'axe de la liaison pivot est sensiblement parallèle auxdits grands côtés, de même que les plaques flexibles de l'alimentation électrique.

De préférence, le corps de torche présente une épaisseur inférieure à 1,5 cm, et encore de préférence inférieure à 1 cm.

Le dispositif peut ainsi être utilisé pour souder des chanfreins étroits d'une largeur supérieure à 10 mm, et ayant des épaisseurs comprises entre 20 mm et 200 mm.

Le dispositif de soudage peut également être utilisé pour d'autres applications, pour des chanfreins larges, ou même pour des soudages bords à bords sans chanfrein.

Selon un aspect avantageux de l'invention, le dispositif de soudage comprend en outre une source laser, le dispositif étant un dispositif hybride laser-arc.

Le laser permet de faire fondre partiellement le métal de base, ce qui permet notamment d'améliorer la fusion entre le métal d'apport et le métal de base.

Typiquement, la source laser projette un faisceau laser sur la zone à souder. La source laser est déplacée suivant le même parcours que le corps de torche, en précédant légèrement le corps de torche.

Le faisceau laser est généralement non focalisé et créé au niveau de la zone à souder une tache d'un diamètre de quelques millimètres, par exemple de 10 mm.

Dans le cas d'un soudage en chanfrein étroit, la source laser est agencée pour générer un faisceau laser permettant de faire fondre une à deux parois latérales opposées du chanfrein suivant la largeur du chanfrein.

Le fait que le dispositif soit de type hybride laser-arc signifie ici que ce dispositif comporte, outre la source laser, un corps de torche et une électrode de type TIG ou de type GMAW, et plus particulièrement de type MIG, ou de type MAG.

De préférence, le corps de torche et l'électrode sont du type MAG.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en coupe et en perspective d'un dispositif de soudage conforme à l'invention ;
- la figure 2 est une vue de côté du corps de torche de la figure 1 et de la source laser du dispositif ; et
- la figure 3 est une vue en coupe axiale de la liaison pivot entre les parties supérieure et inférieur du corps de torche.

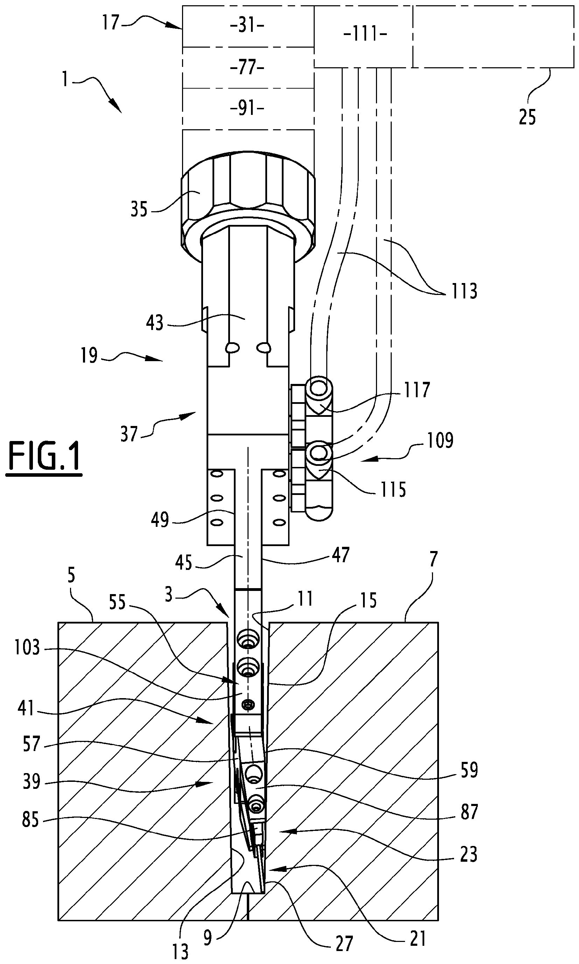

Le dispositif de soudage 1 représenté sur la figure 1 est prévu, entre autre, pour souder dans un chanfrein étroit 3, de grande largeur et de forte épaisseur.

Dans l'exemple illustré sur la figure 1, le chanfrein 3 est ménagé entre deux pièces 5 et 7 à solidariser l'une à l'autre. Le chanfrein 3 est délimité par un fond 9, et présente une ouverture 11 à l'opposé du fond 9. Latéralement, il est délimité par deux parois 13, 15 en vis-à-vis l'une de l'autre, appartenant respectivement aux pièces 5 et 7. Le chanfrein 3 est par exemple rectiligne ou au contraire constitue une gorge circulaire autour des pièces 5 et 7. On entend par épaisseur de chanfrein l'écartement entre le fond 9 et l'ouverture 11.

Le dispositif de soudage 1 comprend :
- un porte torche 17, représenté de manière schématique sur la figure 1 ;
- un corps de torche 19 lié au porte torche 17 ;
- une électrode 21 liée au corps de torche 19 ;
- une alimentation électrique 23 de l'électrode.

Le porte torche 17 est typiquement monté sur une structure 25 permettant de déplacer le dispositif de soudage le long du chanfrein 3. Cette structure 25 est par exemple un chariot guidé par des rails, ou un bras manipulateur.

Dans l'exemple représenté, l'électrode 21 est une électrode consommable, en un métal d'apport destiné à remplir le chanfrein 3. Elle est par exemple en C/Mn, en acier inoxydable, ou en inconel.

L'électrode 21 présente une partie d'extrémité 27 faisant saillie axialement au-delà de l'extrémité libre 29 du corps de torche. L'électrode 21 se présente sous la forme d'un fil continu, s'étendant à partir d'une réserve 31 située sur le porte torche 17, à travers le corps de torche 19, jusqu'à l'extrémité libre 29. La réserve 31 se présente par exemple sous la forme d'une bobine autour de laquelle le fil est enroulé.

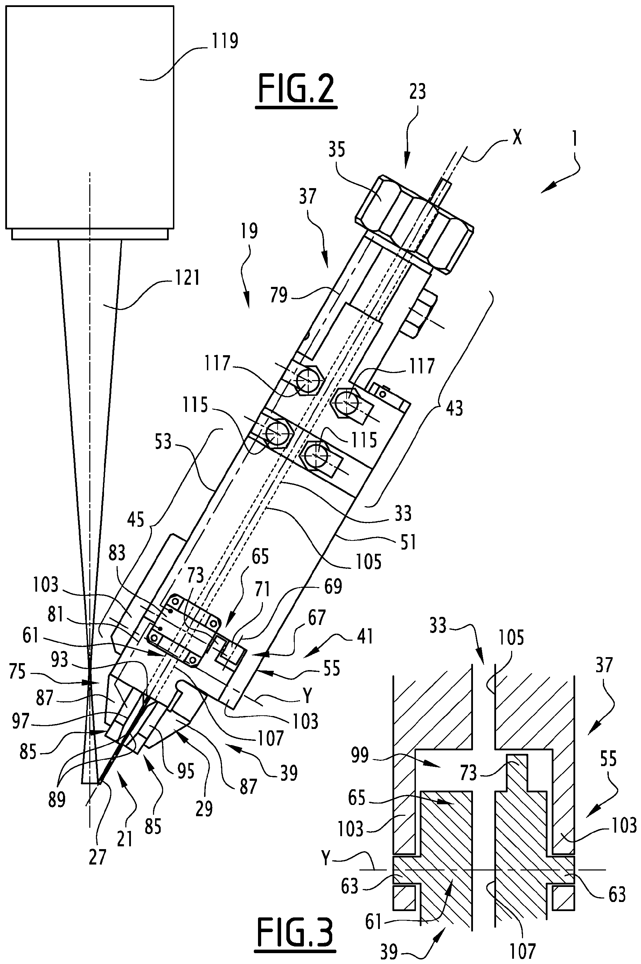

L'électrode 21 est engagée dans un conduit 33, ménagé dans le corps de torche 19 et s'étendant selon un axe X sur toute la longueur du corps de torche jusqu'à l'extrémité 29 (voir figure 2).

Au fur et à mesure que partie d'extrémité 27 de l'électrode est consommée, l'électrode 21 se déroule à partir de la bobine et progresse le long du conduit 33.

Le corps de torche 19 est lié au porte torche 17 par une bague 35, celle-ci venant se visser sur un filetage ménagé sur le porte torche 17.

Le corps de torche 19 comprend une partie supérieure 37 liée au porte torche 17, une partie inférieure 39 définissant l'extrémité libre 29, et une liaison pivot 41 de la partie inférieure à la partie supérieure.

La partie supérieure 37 du corps de torche comporte un premier tronçon axial 43 de plus forte section, prolongé par un second tronçon axial 45 de section réduite. Le tronçon 43 porte la bague 35, et est tourné vers le porte torche 17. Il est prolongé par le tronçon 45 vers l'extrémité 29. Le tronçon 45 présente, comme visible sur les figures 1 et 2, une section rectangulaire perpendiculairement à l'axe X. Le tronçon 45 est ainsi délimité par deux grandes faces 47 et 49 opposées l'une à l'autre, et par deux tranches 51 et 53 raccordant les deux grandes faces l'une à l'autre. Typiquement, l'épaisseur du tronçon 45, prise entre les deux grandes faces 47 et 49, est inférieure à 2 cm, et vaut par exemple 1 cm. Le tronçon 45 du corps de torche peut ainsi facilement s'insérer dans le chanfrein 3, comme visible sur la figure 1.

L'extrémité axiale du tronçon 45, à l'opposée au tronçon 43, définit une chape 55 qui constitue un des éléments de la liaison pivot 41.

La partie inférieure 39 du corps de torche est également délimitée par deux grandes faces 57, 59 (figure 1), sensiblement parallèles et opposées l'une à l'autre, et présente entre les deux grandes faces 57 et 59 sensiblement la même épaisseur que le tronçon 45.

La partie inférieure 39 comporte une zone centrale 61 de liaison avec la partie supérieure 39, définissant deux tourillons 63 coopérant avec la chape 55 pour constituer la liaison pivot 41 (figure 3). L'axe Y de la liaison pivot est perpendiculaire à l'axe X et sensiblement parallèle aux grandes faces 47 et 49. L'axe Y est également parallèle aux grandes faces 57 et 59. La zone 61 est engagée entre les deux bras de la chape 55.

D'un côté de la zone centrale 61, la partie inférieure 39 comporte une seconde zone 65 destinée à coopérer avec un mécanisme à came 67 prévu pour entraîner sélectivement la partie inférieure 39 du corps de torche par rapport à la partie supérieure 37 autour de la liaison pivot 41. La zone 65 constitue une extrémité de la partie inférieure 39 tournée vers la partie supérieure 37.

Le mécanisme à came 67 comporte un axe rotatif d'entraînement 69 portant une came 71. L'axe rotatif 69 est symbolisé par un trait mixte sur la figure 2. L'axe rotatif 69 s'étend sensiblement parallèlement à l'axe X. Il est susceptible d'être entraîné en rotation par rapport au corps de torche par un actionneur non représenté disposé dans le porte torche 17 ou dans la structure 25. L'axe rotatif 69 s'étend à travers la partie supérieure 37 du corps de torche, par un passage non représenté.

La zone 65 définit un suiveur de came 73, destiné à coopérer avec la came 71. La rotation de l'axe rotatif 69 entraîne le déplacement de la came 71 autour dudit axe rotatif 69, ce déplacement entraînant le suiveur de came 73 en rotation autour de l'axe de pivotement Y.

La partie inférieure 39 du corps de torche comporte encore une zone d'extrémité 75, à l'opposé de la zone 65 par rapport à la zone centrale 61.

La zone 75 définit l'extrémité libre 29 du corps de torche.

L'alimentation électrique 23 comprend une source de courant électrique 77, une amenée 79 de courant électrique à travers la partie supérieure 37 du corps de torche, un passage 81 de courant à travers la partie inférieure 39 du corps de torche raccordé électriquement à l'électrode 21, et au moins une plaque flexible 83 raccordant électriquement l'amenée de courant 79 au passage de courant 81.

La source de courant électrique 77 est portée par exemple par le porte torche 17 ou par la structure porteuse 25.

L'amenée de courant 79 est symbolisée par un trait mixte sur la figure 2. Elle est raccordée électriquement à la source de courant 77 et à le ou les plaques souples 83. Dans la partie supérieure 37, le courant électrique circule à travers des composants mécaniques conducteurs, de manière connue en soi.

Le passage de courant 81 est représenté de manière symbolique par un trait mixte sur la figure 2. Le courant circule à travers la partie inférieure 39 en passant par des pièces mécaniques conductrices.

Dans l'exemple des figures 1 et 2, l'alimentation électrique comporte deux plaques souples 83, disposées de part et d'autre du corps de torche. Chaque plaque souple 83 est en cuivre, ou en alliage cuivre-chrome, cuivre-tungstène, et présente une épaisseur de de 0,1 à 0,3 mm.

L'une des plaques souples 83 est rigidement fixée, par exemple par des vis, à la grande face 47 de la partie supérieure 37 du corps de torche. Elle est également fixée, par exemple par des vis, à la grande face 59 de la partie inférieure du corps de torche.

L'autre plaque souple 83 est fixée de la même façon à la grande face 49 de la partie supérieure du corps de torche et à la grande face 57 de la partie inférieure du corps de torche.

Quand la partie inférieure 39 du corps de torche pivote autour de la liaison pivot par rapport à la partie supérieure 37, les deux plaques 83 fléchissent légèrement, de telle sorte que le mouvement de pivotement n'est pas empêché.

L'alimentation électrique 31 comporte encore deux patins conducteurs 85 pinçant l'électrode 21 entre eux et liant l'électrode à la partie inférieure 39 du corps de torche. Les patins 85 sont en cuivre, et présentent une forte section pour le passage du courant électrique. Chaque patin 85 est raccordé électriquement au passage de courant 81.

Les patins 85 ont chacun une forme allongée parallèlement à l'axe X. Chaque patin 85 est interposé entre le fil 21 et un mors 87 formé par la partie inférieure 39 du corps de torche. Il est rigidement fixé à ce mors, par tous moyens adaptés, par exemple par des vis. Il est en contact avec le fil 21 par une tranche 89 située à l'opposé du mors 87. Cette tranche 89 s'étend sur toute la longueur du patin 85.

Le dispositif de soudage 1 comporte encore une source de gaz de protection 91, agencée pour insuffler un gaz de protection dans le conduit 33 de passage de l'électrode. La section de conduit 33 est dimensionnée pour permettre à la fois la circulation du gaz de protection et le passage de l'électrode. Le gaz de protection est par exemple de l'azote ou de l'argon, ou un gaz binaire (argon + CO₂), ou un mélange ternaire (argon + CO₂ + hélium) ou quarternaire (argon + hélium + CO₂ + hydrogène).

La source 91 est portée par le porte torche 17 ou par la structure 25.

Le conduit 33 présente un orifice de sortie 93 pour le gaz de protection et pour l'électrode 21, ménagé sur la partie inférieure du corps de torche. L'orifice de sortie 93 est tourné vers l'extrémité libre de l'électrode.

Comme visible sur la figure 2, l'orifice 93 est situé à la base des deux mors 87, et plus précisément entre les deux mors 87.

Du côté de la grande face 59 de la partie inférieure du corps de torche, chaque patin conducteur 85 est délimité par un plat 95 et une surface biseautée 97. Les surfaces biseautées 97 des deux patins convergent vers l'électrode 21. Elles définissent ainsi ensemble une rainure, s'étendant dans le prolongement de l'orifice 93, par laquelle le flux de gaz de protection peut s'écouler.

Les patins 85 sont conformés de la même façon du côté de la grande face 57. Ils délimitent donc entre eux une seconde rainure, permettant l'écoulement du gaz de protection.

Comme visible sur la figure 3, il existe un interstice 99 entre les parties supérieure et inférieure 37 et 39 du corps de torche. L'interstice 99 est délimité entre la zone 65 de la seconde partie et la partie centrale 101 de la chape 55. L'interstice 99 est fermé latéralement, c'est-à-dire au niveau des petites faces 51 et 53, par les bras 103 de la chape 55. En revanche, il débouche par des ouvertures au niveau des grandes faces 47 et 49, de façon à permettre un débattement en rotation des parties supérieure et inférieure 37 et 39 du corps de torche autour de l'axe Y.

Le conduit de passage 33 comporte un conduit supérieur 105 à travers la partie supérieure 37 du corps de torche et un conduit inférieur 107 à travers la partie inférieure 37 du corps de torche, les conduits supérieur et inférieur 105 et 107 débouchant l'un et l'autre dans l'interstice 99. Quand la partie inférieure est axialement dans le prolongement de la partie supérieure, le conduit supérieur 105 et le conduit inférieur 107 sont alignés l'un avec l'autre.

Les plaques souples 83 sont disposées sur les grandes faces 47 et 49 de façon à fermer les ouvertures de l'interstice 99. Ainsi, les fuites de gaz de protection par ces ouvertures sont extrêmement réduites.

Le dispositif de soudage comporte encore un circuit 109 de refroidissement du corps de torche. Ce circuit de refroidissement comporte une source de liquide réfrigéré 111, au moins un conduit non représenté de circulation du liquide de refroidissement à l'intérieur du corps de torche 19, et des flexibles 113 raccordant la source 111 au circuit de circulation. Dans l'exemple représenté, le corps de torche comporte deux circuits de refroidissement indépendants, chacun équipé d'une entrée 115 et d'une sortie 117 (figure 2). Le liquide de refroidissement est typiquement de l'eau.

Comme visible sur la figure 2, le dispositif de soudage comporte encore une source laser 119, agencée de manière à projeter un faisceau laser 121 à l'intérieur du chanfrein 3. La source laser 119 est par exemple embarquée sur la structure 25 ou sur le porte torche 17. Le laser est de type Yb Yag, avec une puissance maximale de 8kW.

Le procédé de soudage à l'aide du dispositif de soudage décrit ci-dessus va maintenant être détaillé.

La source laser 119 et le corps de torche 19 sont déplacés de manière synchronisée le long du chanfrein 3, par la structure 25. La source laser est légèrement en avance sur le corps de torche 19. La source laser 119 projette le faisceau laser 121 dans le chanfrein 3, de manière à faire fondre la surface des parois latérales 13 et 15. Le corps de torche 19 suit la source laser 119, avec un léger décalage. Il est orienté comme illustré sur la figure 1, avec les grandes faces 47 et 49 tournées vers les parois latérales 13 et 15 du chanfrein.

Pour chaque couche de métal déposée dans le chanfrein 3, il est nécessaire de réaliser deux passes à l'aide du corps de torche. Lors de la première passe, la partie inférieure 39 du corps de torche est inclinée par rapport à la partie supérieure 37 vers la paroi 15. L'extrémité libre de l'électrode 21 est placée pratiquement au ras de la paroi 15. La source de courant 77 alimente en courant électrique les patins 85, à travers l'amenée de courant 79, les plaques flexibles 83 et le passage de courant 81. Les patins 87 étant de fortes sections, il est possible de passer un courant électrique important. Celui-ci est transmis à la partie d'extrémité 27 de l'électrode 21, ce qui provoque la fusion de cette partie d'extrémité 27. La source de gaz 91 insuffle un flux de gaz de protection dans le conduit 33. Celui-ci parcourt le conduit supérieur 105, débouche dans l'interstice 99 et parcourt ensuite le conduit inférieur 107. Il sort du passage 33 par l'orifice 93 et est projeté sur le bain de fusion, sensiblement parallèlement à l'électrode 21.

La source de liquide réfrigéré 111 fait circuler le liquide de refroidissement dans les circuits de refroidissement du corps de torche. Ceci permet de maintenir le corps de torche à une température proche de 25°C pendant l'opération de soudage.

Une fois la première passe terminée, la partie inférieure 39 du corps de torche est déplacée par rapport à la partie supérieure 37, pour compléter la couche de métal de remplissage. Pour ce faire, l'axe rotatif 69 est mis en rotation, et la partie inférieure 39 du corps de torche est entraînée en rotation autour de l'axe de pivotement Y, par le biais de la came 71 et du suiveur de came 73.

La partie inférieure 39 est orientée de telle sorte que l'extrémité libre de l'électrode 21 soit disposée au ras de la paroi 13. Le dispositif de soudage est ensuite déplacé une nouvelle fois le long du chanfrein 3, la source laser 119 précédant le corps de torche 19.

Les opérations ci-dessus sont répétées, pour constituer plusieurs couches de métal d'apport et remplir complètement le chanfrein 3. Les couches sont superposées les unes aux autres. Le nombre de couches dépend de l'épaisseur du chanfrein 3, prise entre le fond 9 et l'ouverture 11.

## Revendications

1. Dispositif de soudage, le dispositif (1) comprenant :
- un porte torche (17) ;
- un corps de torche (19) lié au porte torche (17) ;
- une électrode (21) liée au corps de torche (19) ;
- une alimentation électrique (23) de l'électrode (21) ;
le corps de torche (19) comprenant une partie supérieure (37) liée au porte torche (17), une partie inférieure (39), et une liaison pivot (41) de la partie inférieure (39) à la partie supérieure (37), et l'alimentation électrique (23) comprenant une amenée de courant électrique (79) à travers la partie supérieure (37), un passage (81) de courant à travers la partie inférieure (39) raccordé électriquement à l'électrode (21), et au moins une plaque flexible (83) raccordant électriquement l'amenée de courant (79) au passage de courant (81) ;
**caractérisé en ce que** le corps de torche (19) présente un conduit de passage (33) de l'électrode (21), **en ce que** le dispositif de soudage (1) comprend en outre une source (91) de gaz de protection agencée pour insuffler un gaz de protection dans ledit conduit de passage (33), et **en ce que** le conduit de passage (33) comporte un conduit supérieur (105) à travers la partie supérieure (37) du corps de torche (19) et un conduit inférieur (107) à travers la partie inférieure (39) du corps de torche (19), les conduits supérieur et inférieur (105, 107) débouchant l'un et l'autre dans un interstice (99) ménagé entre les parties supérieure et inférieure (37, 39) du corps de torche (19), l'alimentation électrique (23) comprenant deux plaques flexibles (83), disposées de part et d'autre de l'interstice (91).

2. Dispositif selon la revendication 1, **caractérisé en ce qu'**il comprend un mécanisme à came (67) prévu pour entraîner sélectivement la partie inférieure (39) du corps de torche (19) par rapport à la partie supérieure (37) autour de la liaison pivot (41).

3. Dispositif selon la revendication 1 ou 2, **caractérisé en ce que** l'électrode (21) est une électrode consommable.

4. Dispositif selon l'une quelconque des revendications précédentes, **caractérisé en ce que** l'alimentation électrique (23) comporte deux patins conducteurs (85) pinçant l'électrode (21) entre eux et liant l'électrode (21) à la partie inférieure (39) du corps de torche (19).

5. Dispositif selon l'une quelconque des revendications précédentes, **caractérisé en ce que** le conduit de passage (33) présente au moins un orifice (93) de sortie du gaz de protection ménagé sur la partie inférieure (39) du corps de torche (19) et tourné vers une extrémité libre de l'électrode (21).

6. Dispositif selon l'une quelconque des revendications précédentes, **caractérisé en ce qu'**il comprend un circuit (109) de refroidissement du corps de torche (19).

7. Dispositif selon l'une quelconque des revendications précédentes, **caractérisé en ce que** la partie inférieure (39) du corps de torche (19), et au moins un tronçon (45) de la partie supérieure (37) du corps de torche (19), présentent une épaisseur inférieure à 2 cm .

8. Dispositif selon l'une quelconque des revendications précédentes, **caractérisé en ce qu'**il comprend en outre une source laser (119), le dispositif étant un dispositif hybride laser-arc.

## Patentansprüche

1. Schweißvorrichtung, wobei die Vorrichtung (1) umfasst:
- ein Brenner-Halteelement (17);
- einen Brennerkörper (19), der mit dem Brenner-Halteelement (17) verbunden ist;
- eine mit dem Brennerkörper (19) verbundene Elektrode (21);
- eine elektrische Versorgung (23) der Elektrode (21);
wobei der Brennerkörper (19) ein oberes Teil (37), das mit dem Brenner-Halteelement (70) verbunden ist, ein unteres Teil (39) und eine Schwenkverbindung (41) des unteren Teils (39) an das obere Teil (37) umfasst und die elektrische Versorgung (23) eine Zuleitung (79) von elektrischem Strom durch das obere Teil (37), eine elektrisch mit der Elektrode (21) verbundene Durchführung (81) für elektrischen Strom durch das untere Teil (39) und mindestens eine flexible Platte (83), die elektrisch die Stromzuleitung (79) mit der Stromdurchführung (81) verbindet, umfasst;
**dadurch gekennzeichnet, dass** der Brennerkörper (19) einen Kanal (33) für den Durchgang der Elektrode (21) aufweist, dass die Schweißvorrichtung (1) außerdem eine Schutzgasquelle (91) umfasst, die ausgebildet ist, ein Schutzgas in den Durchgangskanal (33) einzublasen, und dass der Durchgangskanal (33) einen oberen Kanal (105) durch das obere Teil (37) des Brennerkörpers (19) und einen unteren Kanal (107) durch das untere Teil (39) des Brennerkörpers (19) aufweist, wobei der obere und untere Kanal (105, 107) in einem Zwischenraum (99) ineinander münden, der zwischen dem oberen und unteren Teil (37, 39) des Brennerkörpers (19) eingearbeitet ist, wobei die elektrische Versorgung (23) zwei flexible Platten (83) umfasst, die beidseitig des Zwischenraums (91) angeordnet sind.

2. Vorrichtung nach Anspruch 1, **dadurch gekennzeichnet, dass** sie einen Nockenmechanismus (67) umfasst, der vorgesehen ist, selektiv das untere Teil (39) des Brennerkörpers (19) in Bezug auf das obere Teil (37) um die Schwenkverbindung (41) anzutreiben.

3. Vorrichtung nach Anspruch 1 oder 2, **dadurch gekennzeichnet, dass** die Elektrode (21) eine abschmelzende Elektrode ist.

4. Vorrichtung nach einem beliebigen der vorhergehenden Ansprüche, **dadurch gekennzeichnet, dass** die elektrische Versorgung (26) zwei leitende Backen (85) aufweist, die die Elektrode (21) zwischen sich einklemmen und die Elektrode (21) mit dem unteren Teil (39) des Brennerkörpers (19) verbinden.

5. Vorrichtung nach einem beliebigen der vorhergehenden Ansprüche, **dadurch gekennzeichnet, dass** der Durchgangskanal (33) mindestens eine Öffnung (93) für den Austritt des Schutzgases aufweist, die an dem unteren Teil (39) des Brennerkörpers (19) eingearbeitet ist und zu dem freien Ende der Elektrode (21) gerichtet ist.

6. Vorrichtung nach einem beliebigen der vorhergehenden Ansprüche, **dadurch gekennzeichnet, dass** sie einen Kreis (109) zum Kühlen des Brennerkörpers (19) umfasst.

7. Vorrichtung nach einem beliebigen der vorhergehenden Ansprüche, **dadurch gekennzeichnet, dass** das untere Teil (39) des Brennerkörpers (19) und mindestens ein Abschnitt (45) des oberen Teils (37) des Brennerkörpers (19) eine Dicke kleiner als 2 cm aufweisen.

8. Vorrichtung nach einem beliebigen der vorhergehenden Ansprüche, **dadurch gekennzeichnet, dass** sie außerdem eine Laserquelle (119) umfasst, wobei die Vorrichtung eine Hybridvorrichtung Laser-Lichtbogen ist.

## Claims

1. A welding device, the device (1) comprising:
- a torch holder (17);
- a torch body (19) connected to the torch holder (17);
- an electrode (21) connected to the torch body (19);
- a power source (23) of the electrode (21);
the torch body (19) comprising an upper portion (37) connected to the torch holder (17), a lower portion (39), and a pivot link (41) between the lower portion (39) and the upper portion (37), and in that the power source (23) comprises an electrical current lead (79) through the upper portion (37), a current passage (81) through the lower portion (39) electrically connected to the electrode (21), and at least one flexible plate (83) electrically connecting the current lead (79) to the current passage (81);
**characterized in that** the torch body (19) has a passage duct (33) of the electrode (21), **in that** the welding device (1) further comprises a protective gas source (91) arranged to blow a protective gas into said passage duct (33), and **in that** the passage duct (33) includes an upper duct (105) through the upper portion (37) of the torch body (19) and a lower duct (107) through the lower portion (39) of the torch body (19), the upper and lower ducts (105, 107) both emerging in an interstice (99) arranged between the upper and lower portions (37, 39) of the torch body (19), the power source (23) comprising two flexible plates (83), positioned on either side of the interstice (91).

2. The device according to claim 1, **characterized in that** it comprises a cam mechanism (67) provided to selectively drive the lower portion (39) of the torch body (19) relative to the upper portion (37) around the pivot link (41).

3. The device according to claim 1 or 2, **characterized in that** the electrode (21) is a consumable electrode.

4. The device according to any one of the preceding claims, **characterized in that** the power source (23) includes two conductive pads (85) pinching the electrode (21) between them and connecting the electrode (21) to the lower portion (39) of the torch body (19).

5. The device according to any one of the preceding claims, **characterized in that** the passage duct (33) has at least one outlet orifice (93) for the protective gas arranged on the lower part (39) of the torch body (19) and turned toward a free end of the electrode (21).

6. The device according to any one of the preceding claims, **characterized in that** it comprises a cooling circuit (109) for the torch body (19).

7. The device according to any one of the preceding claims, **characterized in that** the lower portion (39) of the torch body (19), and at least one segment (45) of the upper portion (37), have a thickness smaller than 2 cm.

8. The device according to any one of the preceding claims, **characterized in that** it further comprises a laser source (119), the device being a laser-arc hybrid device.
